# EUROPÄISCHE PATENTSCHRIFT

(11) **EP 2 315 651 B1**
(45) Veröffentlichungstag und Bekanntmachung des Hinweises auf die Patenterteilung: **26.02.2014**
(21) Anmeldenummer: 09744046.5
(22) Anmeldetag: 19.08.2009
(51) Int. Cl.: B27N 3/00, B27N 3/06, C08L 97/02

(54) **VERWENDUNG VON MEDIATOREN BEI DER HERSTELLUNG VON FASERPLATTEN**
USE OF MEDIATORS IN THE MANUFACTURING OF FIBERBOARDS
UTILISATION DE MÉDIATEURS DANS LA FABRICATION DE PANNEAUX DE FIBRES

(30) Priorität: 19.08.2008 DE 102008038398
(43) Veröffentlichungstag der Anmeldung: 04.05.2011
(73) Patentinhaber: Georg-August-Universität Göttingen Stiftung Öffentlichen Rechts, 37073 Göttingen (DE)
(72) Erfinder: KHARAZIPOUR, Alireza, 37079 Göttingen (DE); EURING, Markus, 37077 Göttingen (DE)
(74) Vertreter: Michalski Hüttermann & Partner Patentanwälte
(86) Internationale Anmeldenummer: PCT/EP2009/006019
(87) Internationale Veröffentlichungsnummer: WO 2010/020409

(56) Entgegenhaltungen:
- WO-A1-97/29237
- WO-A2-95/07604
- DE-A1- 19 804 583
- US-A- 5 795 855
- US-A1- 2006 063 246
- US-B1- 6 610 172

## Beschreibung

Die vorliegende Erfindung bezieht sich auf das Gebiet der Holz und/oder Verbundwerkstoffe, insbesondere der Faserplatten.

Holzfaserplatten sind wertvolle Werkstoffe, die aus einem nachwachsenden Rohstoff, nämlich lignocellulosehaltigen Stoffen wie Holz hergestellt werden können. Diese Holzwerkstoffe werden in mannigfachen Verarbeitungszweigen als Werkstoff verwendet. Überwiegend ist hierbei z. B. die Möbelindustrie, Automobilindustrie, Verpackungsindustrie, Bauindustrie und dergleichen vertreten. Im Allgemeinen werden Holzfaserplatten mit Bindemitteln vermischt, geformt und dann unter Hitze und Druck verpresst. Sogenannte Medium Density Fiberboards (MDF), High Density Fiberboards (HDF) und Low Density Fiberboards (LDF) und Holzfaserdämmstoffe werden üblicherweise aus Hackschnitzeln von Nadel- oder Laubgehölzen in einer Zerfaserungsmaschine hergestellt, beispielsweise mit sogenannten Refinern (z. B. nach dem TMP-Verfahren), und somit in die gewünschte Fasergröße und Faserfeinheit gebracht. Die Holzfasern werden im Trockenverfahren üblicherweise mit Kunstharzen verleimt (sog. "Blowline-, oder Blender-Verfahren") und auf eine gewünschte Holzfaserfeuchte getrocknet. Die Holzfasern werden dann maschinell in einer Formstation auf ein Transportband in Form eines Vlieses gestreut und anschließend heiß verpresst.

Eine andere Möglichkeit ist die Herstellung von Holzfaserplatten nach dem sogenannten Nassverfahren. Bei diesem Verfahren werden die Fasern in eine Suspension mit Bindemitteln gebracht. Die Fasern haben durch diese Methode einen hohen Feuchtegehalt von bis zu 100 %. Für die weitere Verarbeitung bedeutet dies, dass die Fasern entwässert werden müssen und dann nach einer Vliesbildung und Vorverdichtung in der Heißpresse verpresst werden. Das Nassverfahren findet u. a. Anwendung bei der Herstellung von HDF-Platten und Dämmstoffplatten.

Insbesondere um den Einsatz von formaldehydhaltigen Bindemitteln zu vermeiden wurden in der Vergangenheit z. B. in der DE 4305411 Verfahren beschrieben, welche darauf beruhen, enzymatisch das in den Holzfasern vorhandene Lignin zu polymerisieren und somit als Bindemittel zu nutzen.

In der US 5, 795, 855 und US 6, 610,172 werden verschiedene Mediatoren im Zusammenhang mit dem Bleichen von Pülpe bzw. Jeans offenbart. Die US 2006/063246 offenbart eine neuartige Laccase sowie deren Einsatz bei der Herstellung von Formkörpers und beim Bleichen. Die WO 95/07604 offenbart einen Prozess zur Herstellung von Faserplatten mittels phenoloxidierender Enzyme.

Jedoch sind diese Verfahren häufig technisch aufwendig, insbesondere zeitaufwendig und konnten bisher nicht erfolgreich im großtechnischen Maßstab eingesetzt werden.

Daher stellt sich die Aufgabe, die aus heutigem Stand bekannten Verfahren noch weiter zu verbessern und deren Nachteile zumindest teilweise zu überwinden.

Diese Aufgabe wird durch eine Verwendung nach Anspruch 1 gelöst. Demgemäß wird die Verwendung eines Materials vorgeschlagen, ausgewählt aus der Gruppe enthaltend 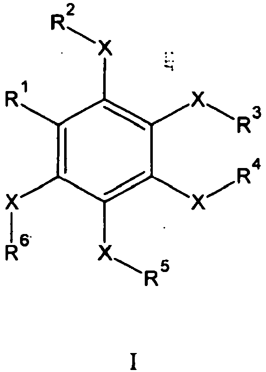 wobei
R¹ausgewählt ist aus Hydroxyl (-OH) und Thiol (-SH);
jedes X unabhängig voneinander ausgewählt ist aus der Gruppe enthaltend Einfachbindung, - CR'R"-, -CR'=CR"-, wobei R' und R" unabhängig voneinander ausgewählt sind aus der Gruppe enthaltend Wasserstoff, Alkyl, Aryl, Cycloalkyl,
sowie
R² bis R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl; Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-, - NR°-, -SiR°R°°-, -CO-, -COO-, -OCO-, -OCO-O-, -SO₂- -S-CO-, -CO-S-, -CY¹=CY² oder - C=C- ersetzt sein können und zwar derart, dass O und/oder S Atome nicht direkt miteinander verbunden sind (endständige CH₃-Gruppen werden wie CH₂-Gruppen im Sinne von CH₂-H verstanden),
und wobei mindestens ein Rest R² bis R⁶ ausgewählt ist aus der Gruppe Alkoxy, Formyl, Carboxy- und/oder Carbonyl derivaten, Keto, Ketoaryl, Halogenketoaryl, Ketoheteroaryl,

Ketoalkyl, Halogenketoalkyl, Ketoalkenyl, Halogenketoalkenyl, Sulphonyl, Sulphoalkyl, Sulphoarenyl, Sulphonate, Sulphate, Sulphon; 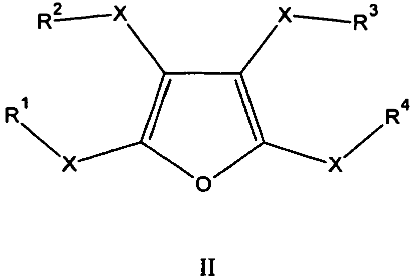
wobei R¹ bis R⁴ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-, - NR°-, -SiR°R°°-, -CO-, -COO-, -OCO-, -OCO-O-, -SO₂-, -S-CO-, -CO-S-, -CY¹=CY² oder - C=C- ersetzt sein können und zwar derart, dass O und/oder S Atome nicht direkt miteinander verbunden sind (endständige CH₃-Gruppen werden wie CH₂-Gruppen im Sinne von CH₂-H verstanden),
jedes X unabhängig voneinander ausgewählt ist aus der Gruppe enthaltend Einfachbindung, - CR'R"-, -CR'=CR"-, wobei R'und R"unabhängig voneinander ausgewählt sind aus der Gruppe enthaltend Wasserstoff, Alkyl, Aryl, Cycloalkyl,
wobei mindestens ein Rest R¹ bis R⁴ ausgewählt ist aus der Gruppe Hydroxyl und Thiol und jeweils das zugehörige X eine Einfachbindung darstellt;
und wobei mindestens ein anderer Rest R¹ bis R⁴ ausgewählt ist aus der Gruppe Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
oder Mischungen daraus als Mediator bei der Herstellung von lignocellulosehaltigen Formkörpern, insbesondere Holzfaser- und/oder Verbundwerkstoffen.

Unter dem Begriff "Mediator" werden insbesondere niedermolekulare Substanzen verstanden, die als Katalysator wirken. Alternativ bzw. ergänzend werden unter dem Begriff "Mediator" insbesondere niedermolekulare Substanzen verstanden, welche in der Lage sind, mit phenoloxidierenden Enzymen in gewünschter synergistischer Weise zusammenzuwirken.

Unter der Bezeichnung "lignocellulosehaltiger Formkörper" werden insbesondere alle flächigen und nicht flächigen Werkstoffe zusammengefasst, die als Hauptbestandteil zerkleinerte lignocellulosehaltige Materialien, wie zum Beispiel Holz, Getreidestroh, Hanf oder Flachs enthalten, welche nach der Formung und unter Temperatur und/oder Druck verpresst werden.

Unter der Bezeichnung "Holz- und/oder Verbundwerkstoff" werden insbesondere Materialien verstanden, die hauptsächlich aus mechanisch oder thermomechanisch zerkleinertem lignocellulosehaltigen Material bestehen, die nach der Beleimung geformt und/oder unter Temperatur und Druck zu Holz und/oder Verbundwerkstoffen verpresst werden.

Allgemeine Gruppendefinition: Innerhalb der Beschreibung und den Ansprüchen werden allgemeine Gruppen, wie z. B.: Alkyl, Alkoxy, Aryl etc. beansprucht und beschrieben. Wenn nicht anders beschrieben, werden bevorzugt die folgenden Gruppen innerhalb der allgemein beschriebenen Gruppen im Rahmen der vorliegenden Erfindung verwendet:
alkyl: lineare und verzweigte C1-C8-Alkyle,
langkettige Alkyle: lineare und verzweigte C5-C20 Alkyle
alkenyl: C2-C8-alkenyl,
cycloalkyl: C3-C8-cycloalkyl,
Alkoxy: C1-C6-alkoxy,
langkettig Alkoxy: lineare und verzweigte C5-C20 Alkoxy
alkylene: ausgewählt aus der Gruppe enthaltend:
   methylene; 1,1-ethylene; 1,2-ethylene; 1,1-propylidene; 1,2-propylene; 1,3- propylene; 2,2-propylidene; butan-2-ol-1,4-diyl; propan-2-ol-1,3-diyl; 1, 4-butylene; cyclohexane-1,1-diyl; cyclohexan-1,2-diyl; cyclohexan-1,3- diyl; cyclohexan-1,4-diyl; cyclopentane-1,1-diyl; cyclopentan-1,2-diyl; und cyclopentan-1,3-diyl,
aryl: ausgewählt aus Aromaten mit einem Molekulargewicht unter 300 Da.
arylene: ausgewählt aus der Gruppe enthaltend: 1,2-phenylene; 1,3- phenylene; 1,4-phenylene; 1,2-naphtalenylene; 1,3-naphtalenylene; 1,4- naphtalenylene; 2,3-naphtalenylene; 1-hydroxy-2,3-phenylene; 1-hydroxy-2,4- phenylene; 1-hydroxy-2,5- phenylene; und 1-hydroxy-2,6-phenylene,
Carboxyderivate: der Rest -COXR₁, wobei X NH oder O darstellt und R₁ ausgewählt ist aus der Gruppe enthaltend Alkyl, Aryl, Cycloalkyl, Heteroaryl, Heterocycloalkyl.
heteroaryl: ausgewählt aus der Gruppe enthaltend: pyridinyl; pyrimidinyl; pyrazinyl; triazolyl; pyridazinyl; 1,3,5-triazinyl; quinolinyl; isoquinolinyl; quinoxalinyl; imidazolyl; pyrazolyl; benzimidazolyl; thiazolyl; oxazolidinyl; pyrrolyl; thiophenyl; carbazolyl; indolyl; und isoindolyl, wobei das Heteroaryl mit der Verbindung über jedes Atom im Ring des ausgewählten Heteroaryls verbunden sein kann.
heteroarylene: ausgewählt aus der Gruppe enthaltend: pyridindiyl; quinolindiyl; pyrazodiyl; pyrazoldiyl; triazolediyl; pyrazindiyl, thiophendiyl; und imidazolediyl, wobei das heteroarylene als Brücke in der Verbindung über ein beliebiges Atom im Ring des ausgewählten Heteroaryls fungiert, speziell bevorzugt sind: pyridin-2, 3-diyl; pyridin-2,4-diyl; pyridin-2,5-diyl; pyridin-2,6-diyl; pyridin-3,4- diyl; pyridin-3,5-diyl; quinolin-2,3-diyl; quinolin-2,4-diyl; quinolin-2, 8-diyl; isoquinolin-1,3-diyl; isoquinolin-1,4-diyl; pyrazol-1,3-diyl; pyrazol-3,5- diyl; triazole-3,5-diyl; triazole-1,3-diyl; pyrazin-2,5-diyl; und imidazole-2,4-diyl, thiophen-2,5-diyl, thiophen-3,5-diyl; ein -C1-C6-heterocycloalkyl, ausgewählt aus der Gruppe enthaltend: piperidinyl; piperidine; 1,4-piperazine, tetrahydrothiophene; tetrahydrofuran; 1,4,7-triazacyclononane; 1,4,8,11- tetraazacyclotetradecane; 1,4,7,10,13-pentaazacyclopentadecane; 1,4-diaza- 7-thia-cyclononane; 1,4- diaza-7-oxa-cyclononane; 1,4,7,10-tetraazacyclododecane; 1,4-dioxane; 1,4, 7-trithia-cyclononane; pyrrolidine; und tetrahydropyran, wobei das Heteroaryl mit dem C1-C6-Alkyl über jedes Atom im Ring des ausgewählten Heteroaryls verbunden sein kann.
heterocycloalkylene: ausgewählt aus der Gruppe enthaltend: piperidin-1,2- ylene; piperidin-2,6-ylene; piperidin-4,4-ylidene; 1,4-piperazin-1,4-ylene; 1,4-piperazin-2,3-ylene; 1,4-piperazin-2,5-ylene; 1,4-piperazin-2,6-ylene; 1,4-piperazin- 1,2-ylene; 1,4-piperazin-1,3-ylene; 1,4-piperazin-1,4-ylene; tetrahydrothiophen-2,5-ylene; tetrahydrothiophen-3,4-ylene; tetrahydrothiophen-2,3-ylene; tetrahydrofuran-2,5-ylene; tetrahydrofuran- 3,4-ylene; tetrahydrofuran-2,3-ylene; pyrrolidin-2,5-ylene; pyrrolidin-3,4-ylene; pyrrolidin-2,3-ylene; pyrrolidin-1,2-ylene; pyrrolidin-1,3-ylene; pyrrolidin-2,2-ylidene; 1,4,7-triazacyclonon-1,4-ylene; 1,4,7- triazacyclonon-2,3-ylene; 1,4,7-triazacyclonon-2,9-ylene; 1,4,7-triazacyclonon-3,8-ylene; 1,4,7-triazacyclonon-2,2- ylidene; 1,4,8,11-tetraazacyclotetradec-1,4-ylene; 1,4,8,11- tetraazacyclotetradec-1,8-ylene; 1,4,8,11-tetraazacyclotetradec-2,3-ylene; 1,4,8,11-tetraazacyclotetradec-2,5-ylene; 1,4,8,11- tetraazacyclotetradec-1,2-ylene; 1,4,8,11-tetraazacyclotetradec-2,2-ylidene; 1,4,7,10-tetraazacyclododec-1,4-ylene; 1,4,7,10-tetraazacyclododec-1,7-ylene; 1,4,7,10-tetraazacyclododec-1,2- ylene; 1,4,7,10-tetraazacyclododec-2,3- ylene; 1,4,7,10-tetraazacyclododec-2,2-ylidene; 1,4,7,10,13 pentaazacyclopentadec-1,4-ylene; 1,4,7,10,13- pentaazacyclopentadec-1,7-ylene; 1,4,7,10,13-pentaazacyclopentadec-2,3- ylene; 1,4,7,10,13-pentaazacyclopentadec-1,2-ylene; 1,4,7,10, 13-pentaazacyclopentadec-2,2-ylidene; 1,4-diaza-7-thia-cyclonon- 1,4-ylene; 1,4-diaza-7-thia-cyclonon-1,2-ylene; 1,4-diaza-7thia-cyclonon-2,3-ylene; 1,4-diaza-7-thia-cyclonon-6,8-ylene; 1,4-diaza-7-thia-cyclonon- 2,2-ylidene; 1,4-diaza-7-oxacyclonon-1,4-ylene; 1,4-diaza-7-oxa-cyclonon- 1,2-ylene; 1,4diaza-7-oxa-cyclonon-2,3-ylene; 1,4-diaza-7-oxa-cyclonon-6, 8-ylene; 1,4-diaza-7-oxa-cyclonon-2,2-ylidene; 1,4-dioxan-2,3-ylene; 1,4- dioxan-2,6-ylene; 1,4-dioxan-2,2-ylidene; tetrahydropyran-2,3-ylene; tetrahydropyran-2,6-ylene; tetrahydropyran-2,5-ylene; tetrahydropyran-2,2- ylidene; 1,4,7-trithia-cyclonon-2,3-ylene; 1,4,7-trithia-cyclonon-2,9- ylene; und 1,4,7-trithia-cyclonon-2,2-ylidene,
heterocycloalkyl: ausgewählt aus der Gruppe enthaltend: pyrrolinyl; pyrrolidinyl; morpholinyl; piperidinyl; piperazinyl; hexamethylene imine; 1,4-piperazinyl;
tetrahydrothiophenyl; tetrahydrofuranyl; 1,4,7- triazacyclononanyl; 1,4,8,11-tetraazacyclotetradecanyl; 1,4,7,10,13- pentaazacyclopentadecanyl; 1,4-diaza-7-thiacyclononanyl; 1,4-diaza-7-oxa- cyclononanyl; 1,4,7,10-tetraazacyclododecanyl; 1,4-dioxanyl; 1,4,7- trithiacyclononanyl; tetrahydropyranyl; und oxazolidinyl, wobei das Heterocycloalkyl mit der Verbindung über jedes Atom im Ring des ausgewählten Heterocycloalkyls verbunden sein kann.
halogen: ausgewählt aus der Gruppe enthaltend: F; Cl; Br und I,
halogenalkyl: ausgewählt aus der Gruppe enthaltend mono, di, tri-, poly und perhalogenated lineare und verzweigte C1-C8-alkyl
pseudohalogen: ausgewählt aus der Gruppe enthaltend -CN, -SCN, -OCN, N3, -CNO, -SeCN

Soweit nicht anders erwähnt, sind die folgenden Gruppen mehr bevorzugte Gruppen innerhalb der allgemeinen Gruppendefinition:
alkyl: lineare und verzweigte C1-C6-alkyl, noch bevorzugt Methyl und Ethyl
langkettige Alkyle: lineare und verzweigte C5-C10 alkyl, vorzugsweise C6-C8 alkyle
alkenyl: C3-C6-alkenyl,
cycloalkyl: C6-C8-cycloalkyl,
Alkoxy: C1-C4-alkoxy, noch bevorzugt Methoxy und Ethoxy
langkettig Alkoxy: lineare und verzweigte C5-C10 alkoxy, vorzugsweise lineare C6-C8 alkoxy
Alkylen: ausgewählt aus der Gruppe enthaltend: Methylene; 1,2-ethylene; 1,3-propylene; butan-2-ol-1,4-diyl; 1,4-butylene; cyclohexane-1,1-diyl; cyclohexan-1,2-diyl; cyclohexan-1,4-diyl; cyclopentane-1,1-diyl; und cyclopentan-1,2-diyl,
Aryl: ausgewählt aus der Gruppe enthaltend: phenyl; biphenyl; naphthalenyl; anthracenyl; und phenanthrenyl,
Arylen: ausgewählt aus der Gruppe enthaltend: 1,2-phenylene; 1,3- phenylene; 1,4-phenylene; 1,2-naphtalenylene; 1,4-naphtalenylene; 2,3- naphtalenylene und 1-hydroxy-2,6-phenylene,
Heteroarylen: Thiophen, Pyrrol, Pyridin, Pyridazin, Pyrimidin, Indol, Thienothiophen
Halogen: ausgewählt aus der Gruppe enthaltend: Br und Cl, besonders bevorzugt Br

Überraschend hat sich herausgestellt, dass die Verwendung eines derartigen erfindungsgemäßen Materials bei der Herstellung von lignocellulosehaltigen Formkörpern von Vorteil ist. Insbesondere bietet die Verwendung eines Materials gemäß der vorliegenden Erfindung bei den meisten Anwendungen einen oder mehrere der folgenden Vorteile:
- Die Herstellung der lignocellulosehaltigen Formkörper ist auf schnellere und einfachere Weise möglich
- formaldehydhaltige Bindemittel können weitestgehend ausgeschlossen, teilweise sogar ganz vermieden werden.
- Bei der Herstellung, bei der weiteren Verarbeitung und dem anschließenden Gebrauch entstehen keine schädlichen Emissionen.
- Das erfindungsgemäße Material bildet keine toxischen Abbauprodukte, so dass der Einsatz unbedenklich ist
- So hergestellte Produkte können problemlos recycelt werden.

Gemäß einer bevorzugten Ausführungsform enthält das erfindungsgemäße Material mindestens ein Material mit der folgenden Struktur 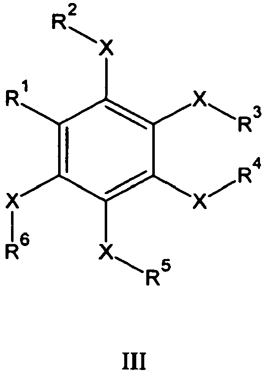 wobei
R¹ ausgewählt ist aus Hydroxyl (-OH) und Thiol (-SH);
R⁴ ausgewählt ist aus der Gruppe enthaltend Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
jedes X unabhängig voneinander ausgewählt ist aus der Gruppe enthaltend Einfachbindung, - CR'R"-, -CR'=CR"-, wobei R'und R"unabhängig voneinander ausgewählt sind aus der Gruppe enthaltend Wasserstoff, Alkyl, Aryl, Cycloalkyl,
sowie
R², R³ R⁵ und R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-, - NR°-, -SiR°R°°-, -CO-, -COO-, -OCO-, -OCO-O-, -SO₂-, -S-CO-, -CO-S-, -CY¹=CY² oder - C=C- ersetzt sein können und zwar derart, dass O und/oder S Atome nicht direkt miteinander verbunden sind (endständige CH₃-Gruppen werden wie CH₂-Gruppen im Sinne von CH₂-H verstanden).

Diese Materialien haben sich in der Praxis häufig besonders bewährt. Ohne darauf beschränkt zu sein, wird dies darauf zurückgeführt, dass hier die Hydroxy/Thiol-Funktion in 4- Stellung zu einer aktivierenden Gruppe ist.

Gemäß einer bevorzugten Ausführungsform der Erfindung enthält das erfindungsgemäße Material keinen Stickstoff. Dies hat sich als vorteilhaft herausgestellt, da so auf einfache Weise sichergestellt werden kann, dass keine unerwünschten Abbauprodukte (wie nitrose Gase etc.) bei der Herstellung des lignocellulosehaltigen Formkörpers entstehen.

Gemäß einer bevorzugten Ausführungsform ist das mindestens ein Material ausgewählt aus der Gruppe enthaltend
- Hydroxybenzoesäure, bevorzugt 4-Hydroxybenzoesäure, sowie deren Ester, bevorzugt Alkyl- und Arylester
- Hydroxyfuransäure, bevorzugt 2-Hydroxy-furan-5-carbonsäure und/oder 3-Hydroxy-furan-5-carbonsäure , sowie deren Ester, bevorzugt Alkyl- und Arylester
- Hydroxyzimtsäure, bevorzugt 4-Hydroxyzimtsäure, sowie deren Ester, bevorzugt Alkyl- und Arylester
- Verbindungen der allgemeinen Struktur IV 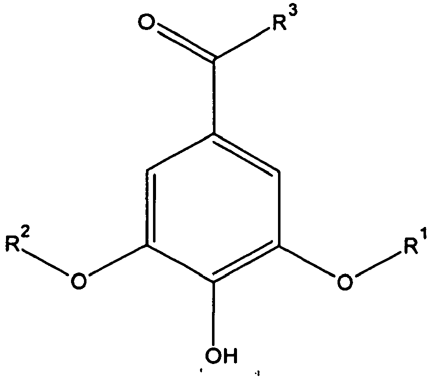 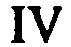
   wobei R¹, R² und R³ unabhängig voneinander aus Wasserstoff, Alkyl (bevorzugt Methyl und/oder Ethyl), Cycloalkyl und Aryl ausgewählt sind. Insbesondere bevorzugt sind Acetosyringon (R¹ ,R²,R³ = Methyl), Syringaldehyd (R¹ ,R²= Methyl, R³ = H),
- Verbindungen der allgemeinen Struktur V 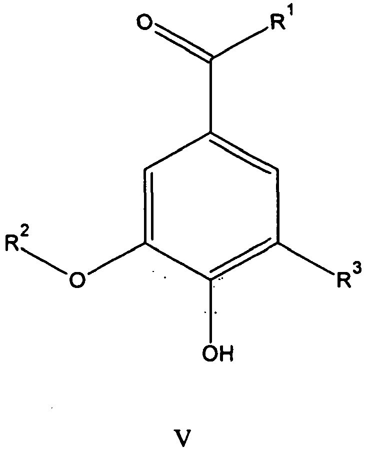
   wobei R¹, R² und R³ unabhängig voneinander aus Wasserstoff, Alkyl (bevorzugt Methyl und/oder Ethyl), Cycloalkyl und Aryl ausgewählt sind. Insbesondere bevorzugt sind Acetovanillon (R¹,R²= Methyl, R³ = H), Vanillin (R¹= Methyl, R², R³ = H), Ethylvanillin (R¹= Ethyl, R², R³ = H)
- Verbindungen der allgemeinen Struktur VI 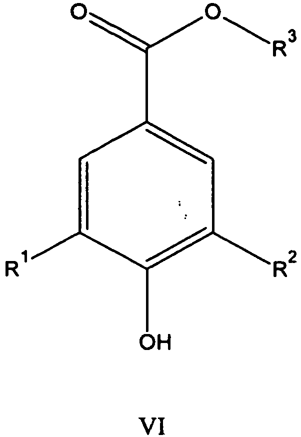
   wobei R¹, R² und R³ unabhängig voneinander aus Wasserstoff, Alkoxy (bevorzugt Methoxy und/oder Ethoxy), Alkyl (bevorzugt Methyl und/oder Ethyl), Cycloalkyl und Aryl ausgewählt sind. Insbesondere bevorzugt sind Methylsyringat (R¹,R² = Methoxy, R³ = Methyl), Vanillinsäure (R¹,R³ =H, R² = Methoxy)
- Verbindungen der allgemeinen Struktur VII 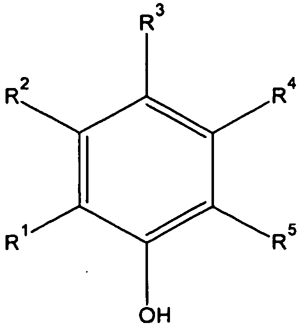 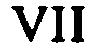
   wobei R¹, R², R³, R⁴ und R⁵ unabhängig voneinander aus Wasserstoff, Hydroxy, Alkyl (bevorzugt Methyl und/oder Ethyl), Alkoxy (bevorzugt Methoxy und/oder Ethoxy), Cycloalkyl und Aryl ausgewählt sind. Insbesondere bevorzugt sind 2-6-Dimethylphenol (R¹,R⁵ = Methyl, R², R³,R⁴ = H), 2,6-Dimethoxyphenol (R¹,R⁵ = Methoxy, R², R³,R⁴ = H), 3-Methoxyphenol (R² =Methoxy, R¹, R³, R⁴, R⁵ =H), 2-Hydroxybiphenyl (R¹ = Phenyl, R², R³, R⁴, R⁵ =H), 3-Hydroxybiphenyl (R² = Phenyl, R¹, R³, R⁴, R⁵ =H), 4-Hydroxybiphenyl (R³ = Phenyl, R¹, R², R⁴, R⁵ =H), Catechol (R¹ =Hydroxy, R², R³, R⁴, R⁵ =H), Guajacol (R¹ =Methoxy, R², R³, R⁴, R⁵ =H), 2,4,6-Trimethoxyphenol (R¹,R³ , R⁵ =Methoxy, R², R⁴ =H).
- Verbindungen der allgemeinen Struktur VIII 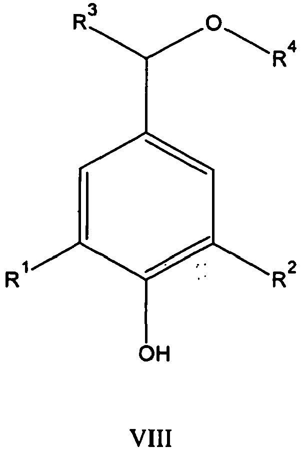
   wobei R¹, R², R³ und R⁴ unabhängig voneinander aus Wasserstoff, Alkoxy (bevorzugt Methoxy und/oder Ethoxy), Alkyl (bevorzugt Methyl und/oder Ethyl), Cycloalkyl und Aryl ausgewählt sind. Insbesondere bevorzugt sind Vanillinalkohol (R¹,R³ R⁴=H, R² = Methoxy)
- Verbindungen der allgemeinen Struktur IX 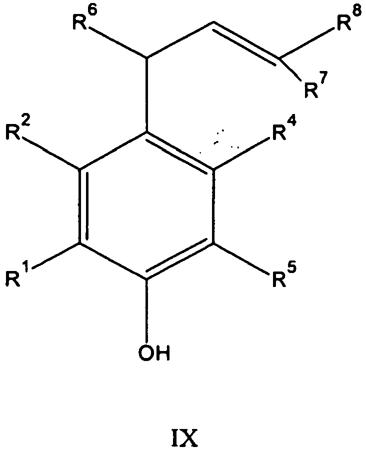
   wobei R¹, R², R³, R⁴, R⁵ R⁶, R⁷ und R⁸ unabhängig voneinander aus Wasserstoff, Alkyl (bevorzugt Methyl und/oder Ethyl), Alkoxy (bevorzugt Methoxy und/oder Ethoxy), Cycloalkyl und Aryl ausgewählt sind. Insbesondere bevorzugt sind 2,6-Dimethoxy-4-allylphenol (R¹,R⁵ = Methoxy, R², R³,R⁴, R⁶, R⁷,R⁸ = H), 3-Methoxy-4-allylphenol (R² =Methoxy, R¹, R³, R⁴, R⁵, R⁶, R⁷,R⁸ =H).
- Phenolphtalein, Dichlorindophenol
- Hydroxyanthranylsäure, bevorzugt 3-Hydroxyanthranylsäure und deren Ester, bevorzugt Alkyl und/oder Arylester
- Hydroxybenzylalkohol, bevorzugt 2- und/oder 4-Hydroxybenzylöakohol
oder Mischungen daraus.

Gemäß einer bevorzugten Ausführungsform der Erfindung wird das Material zusammen mit mindestens einem phenoloxidierenden Enzym, bevorzugt ausgewählt aus der Gruppe Laccasen, Mg-Peroxidasen, Ligninperoxidasen, Ligninasen, Bilirubinoxidasen, Catecholoxidasen oder Mischungen daraus verwendet.

Gemäß einer bevorzugten Ausführungsform der Erfindung beträgt das Verhältnis zwischen dem Material und dem Enzym zwischen ≥0,5 U/ml Enzym pro 1 mM Material (ggf. die Summe der Materialien) bis ≤40 U/ml Enzym pro 1mM Material.

Die Aktivität des Enzyms (in Units pro Milliliter U/ml) wird dabei in sog. "ABTS-Units" nach MATSUMURA, E.; YAMAMOTO, E.; NUMATA, A.; KAWANO, T.; SHIN, T.; MURAO, S. (1986): Structures of the Laccase-catalysed Oxidation Products of Hydroxybenzoic Acids in the presence of ABTS. Japan Society for Bioscience, Tiotech. and Agrochem., Agric. Biol. Chem 50 (5), pp. 1355-1357 gemessen.

Dies hat sich in der Praxis besonders bewährt. Besonders bevorzugt beträgt das Verhältnis ≥1 U/ml Enzym pro 1mM Material bis ≤30 U/ml Enzym pro 1mM Material, noch bevorzugt ≥10 U/ml Enzym pro 1mM Material bis≤20 U/ml Enzym pro 1mM Material.

Gemäß einer bevorzugten Ausführungsform der Erfindung ist der lignocellulosehaltige Formkörper bindemittelfrei.

Der Ausdruck "bindemittelfrei" im Sinne der vorliegenden Erfindung umfasst dabei insbesondere, dass keine synthetischen oder naturnahe Bindemittel (z. B. Aminoplasten, Phenoplasten, Isocyanate etc., Proteine, Tannine, Stärke etc.) eingesetzt werden und/oder der Anteil dieser Bindemittel am fertigen lignocellulosechaltigen Formkörper weniger als 1 Gew.-% beträgt. Überraschenderweise hat sich herausgestellt, dass durch die erfindungsgemäße Verwendung bei den meisten Anwendungen auf ein sonstiges Bindemittel (im wesentlichen) verzichtet werden kann.

Gemäß einer bevorzugten Ausführungsform der Erfindung wird der lignocellulosehaltige Formkörper aus ligninhaltigen Fasern hergestellt, wobei Holzfasern insbesondere bevorzugt sind.

Dabei bedeutet der Term "Fasern" insbesondere ligninhaltige Fasern mit einer Länge von ≥0,5 mm bi≤10 mm und einem Faserdurchmesser von ≥0,05 mm bis ≤3 mm. Bevorzugt sind insbesondere Fasern mit Länge von ≥1 mm bis ≤6 mm und einem Faserdurchmesser von ≥0,1 mm bis ≤1 mm.

Die erfindungsgemäße Aufgabe wird außerdem durch Verfahren zur Herstellung von lignocelluloschaltigen Formkörpern, insbesondere Holz- und/oder Verbundwerkstoffen, gelöst, umfassend die Schritte
a) Versetzen mindestens eines Vorläufermaterials mit einer Lösung, enthaltend mindestens einen wie oben beschriebenen Mediator und mindestens ein phenoloxidierendes Enzym
b) sofortige mechanische und/oder thermomechanische Verformung

Der Term "sofortig" bedeutet und/oder umfasst dabei insbesondere eine Inkubationszeit von <30 min, bevorzugt <20 min, noch bevorzugt <10 min. Gemäß einer bevorzugten Ausführungsform der Erfindung wird Schritt b) ohne Inkubationszeit durchgeführt.

Dabei wird der Term "Inkubationszeit" so verstanden, dass nach dem Aufbringen des Enzym-Mediator-Gemisches noch eine gewisse Zeit (= die Inkubationszeit) abgewartet wird, die unabhängig ist vom sonstigen Ablauf des Herstellungsprozesses. Ist keine Inkubationszeit vorhanden oder notwendig, wird Schritt b) somit ohne Verzögerung, die nicht auf die sonstige konkrete Anwendung zurückzuführen wäre, nach Schritt a) durchgeführt.

Überraschend hat sich herausgestellt, dass ein derartiges Verfahren bei der Herstellung von lignocellulosehaltigen Formkörpern von Vorteil ist. Insbesondere bietet das Verfahren gemäß der vorliegenden Erfindung bei den meisten Anwendungen einen oder mehrere der folgenden Vorteile:
- Die Herstellung der lignocellulosehaltigen Formkörper ist auf schnellere und einfachere Weise möglich
- Die Rohstoffe sind dauerhaft verfügbar.
- formaldehydhaltige Bindemittel können weitestgehend ausgeschlossen, teilweise sogar ganz vermieden werden.
- Bei der Herstellung, bei der weiteren Verarbeitung und dem anschließenden Gebrauch entstehen keine schädlichen Emissionen.
- Das erfindungsgemäße Material bildet keine toxischen Abbauprodukte, so dass der Einsatz unbedenklich ist
- So hergestellte Produkte können problemlos recycelt werden.
- Die Verwendung bietet den Holzwerkstoffunternehmen die Chancen, unweltpolitisch akzeptierte Produktionsverfahren zu etablieren.
- Das Produkt ist unabhängig vom steigenden Rohölpreis herzustellen.
- Ein Verkauf von gesundheitlich unbedenklichen, formaldehydfreien Produkte finden eine breite Akzeptanz bei den Konsumenten.

Unter dem Term "Vorläufermaterial" werden insbesondere gemäß einer bevorzugten Ausführungsform der Erfindung ligninhaltige Fasern, insbesondere Holzfasern, aber auch Hanffasern, Flachsfasern, Jutefasern, Fasern aus Baumwolistengeln, Fasern aus Getreidestroh, Fasern von bestimmten Süßgräsern etc. verstanden.

Dabei bedeutet der Term Fasern insbesondere ligninhaltige Fasern mit einer Länge von ≥0,5 mm bis ≤10 mm und einem Faserdurchmesser von ≥0,05 mm bis ≤3 mm. Bevorzugt sind insbesondere Fasern mit Länge von ≥ 1 mm bis ≤6 mm und einem Faserdurchmesser von ≥0,1 mm bis ≤1 mm.

Gemäß einer bevorzugten Ausführungsform der Erfindung wird der Mediator in Schritt a) zusammen mit mindestens einem phenoloxidierenden Enzym ausgewählt aus der Gruppe Laccasen, Mg-Peroxidasen, Ligninperoxidasen, Ligninasen oder Mischungen daraus verwendet.

Gemäß einer bevorzugten Ausführungsform beträgt die Konzentration (in U/ml) des mindestens einen Enzyms (bzw. die kombinierte Konzentration der Enzyme) ≥50 U/ml bis ≤400 U/ml. Dies hat sich in der Praxis besonders bewährt. Besonders bevorzugt liegt die Konzentration bei ≥100 U/ml bis ≤300 U/ml, noch bevorzugt ≥150 U/ml bits ≤250 U/ml. Gemäß einer bevorzugten Ausführungsform der Erfindung beträgt das Verhältnis zwischen dem Mediator und dem mindestens einem Enzym zwischen ≥0,5 U/ml Enzym pro 1 mM Mediator (ggf. die Summe der Materialien) bis ≤40 U/ml Enzym pro 1mM Mediator.

Dies hat sich in der Praxis besonders bewährt. Besonders bevorzugt beträgt das Verhältnis ≥1 U/ml Enzym pro 1mM Mediator bis ≤30 U/ml Enzym pro 1mM Mediator, noch bevorzugt ≥10 U/ml Enzym pro 1mM Mediator bis ≤20 U/ml Enzym pro 1mM Mediator.

Die vorliegende Erfindung bezieht sich außerdem auf einen lignocellulosehaltigen Formkörper, insbesondere einen Holz und/oder Verbundwerkstoff, im Besonderen eine Faserplatte, hergestellt unter Verwendung eines erfindungsgemäßen Materials und/oder nach dem erfindungsgemäßen Verfahren.

Bevorzugt ist der Lignocellulosehaltiger Formkörper insbesondere ein Holz und/oder Verbundwerkstoff, besonders eine Faserplatte, bindemittelfrei.

Die erfindungsgemäßen Lignocellulosehaltiger Formkörper können bei einer Vielzahl von Anwendungen eingesetzt werden, insbesondere (aber nicht darauf beschränkt):
- MDF-Platten für nicht tragende Zwecke im trockenen Innenbereich (Möbel- und Innenausbau)
- Furnierte Platten: Furnier - Trägerplatte MDF - Furnier
- MDF unter Dekorpapier
- MDF unter Oberflächenlackierung
- HDF für Laminatfußböden, Parkettfußböden
- Dämmstoffplatten, z. B. Wärme- und Trittschalldämmplatten
- LDF- Platten
- Formteile, z. B. im Sanitärbereich
- Presslinge, z. B. für die Automobil-Innenauskleidung

Die vorgenannten sowie die beanspruchten und in den Ausführungsbeispielen beschriebenen erfindungsgemäß zu verwendenden Bauteile und Komponenten unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Beispiele und Zeichnungen, in denen - beispielhaft - mehrere Ausführungsbeispiele erfindungsgemäßer lignocellulosehaltiger Formkörper dargestellt sind. In den Zeichnungen, welche sich auf die Beispiele beziehen, zeigt:
- Fig. 1: die mechanisch-technologischen Eigenschaften (Querzugfestigkeit und Dickenquellung) einer Holzfaserplatten gemäß der vorliegenden Erfindung sowie zwei Platten gemäß Vergleichsbeispielen; sowie
- Fig. 2: die Biegefestigkeiten der Platten gemäß Fig. 1

### BEISPIEL I

Die Erfindung wird nachfolgend gemäß eines - rein illustrativ zu verstehenden - Beispiels gezeigt.

Hierzu wurde 4-Hydroxybenzoesäure als Mediator sowie handelsübliche Laccase (Fa. Novozyme, Dänemark) als Enzym verwendet und aus Holzfasern (TMP-Fasern, bestehend aus Kiefern-, Fichten- oder Buchenholz mit einer Länge von 1,23 mm bis 5,12 mm und einem Faserdurchmesser von 0,11 mm bis 0,87 mm) eine MDF-Faserplatte nach folgendem Verfahren hergestellt:
Es wurde ein Puffergemisch auf 200 U/ml Laccase und 10 mM 4-Hydroxybenzoesäure (L 200 + 10 mM HBA) eingestellt.

Anschließend wurden die Holzfasern mit der Laccase-Mediatorlösung im Einachs-Mischer (Blender-Verfahren) besprüht. Es handelt sich um ein Sprühverfahren, welches im herkömmlichen Sinne als Trockenverfahren bekannt ist. Es wurden üblicherweise 11 Lösung auf 1 kg Holzfasern verwendet.

Die Holzfasern wurden nach dem Besprühen mit Laccase-Mediator Puffergemisch unmittelbar nach dem Besprühen im Mischer durch die Rohrtrocknungsanlage auf 10 % - 14 % Feuchte getrocknet. Die Trocknereingangstemperatur betrug dabei 100 °C - 120 °C, die Trocknerausgangstemperatur 40 °C. Nach der Trocknung erfolgte das Streuen zum Faservlies und das Verpressen zu MDF-Platten.

Ein Hydrophobierungsmittel kam bei der Herstellung der MDF-Platten nicht zum Einsatz.

Alle hergestellten Faserplatten wurden nach einer Abkühlphase (mindestens 4 Stunden) geschliffen und zurechtgeschnitten, um nach den mechanisch-technologischen Eigenschaftstest nach den EN-Normen 310, 317 und 319 überprüft zu werden. Die Überprüfung der Biege- und Querzugfestigkeiten fand an einer *Zwick-Roell*-Prüfmaschine statt, eine Überprüfung der Rohdichten mittels des Rohdichteprofilmessgrätes DA-X von *GreCon.*

Als Referenzplatten dienten Holzfaserplatten, bei welchen die nativen Holzfasern mit einem Puffergemisch aus denaturierter Laccase (totautoklaviert = inaktives Enzym) und ohne Mediator besprüht und zu MDF-Platten verpresst wurden. Weiterhin wurden zu Vergleichszwecken MDF-Platten hergestellt, deren Fasern zuvor nur mit Laccase-Puffergemisch (L 200) ohne Mediator besprüht wurden.

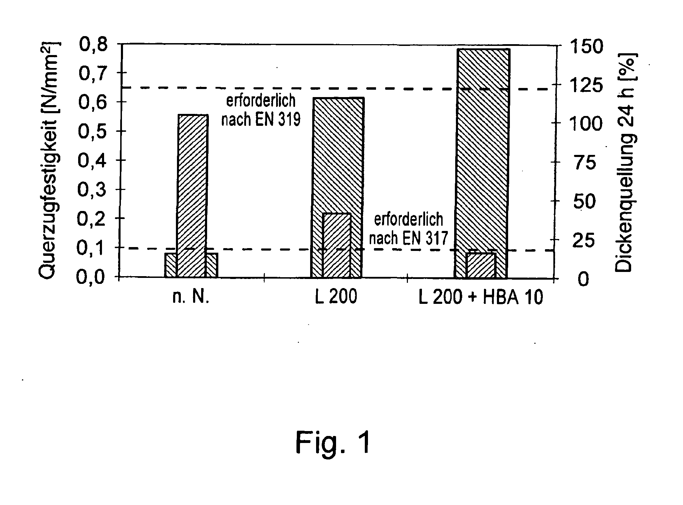

Fig. 1 zeigt die Querzugfestigkeit (breite Balken) sowie die Dickenquellung (dünne Balken) für die erfindungsgemäße Holzfaserplatte (L200 + HBA 10) sowie die erwähnten Vergleichsbeispiele, d. h. eine Referenz-Holzfaserplatte und eine Holzfaserplatte nur mit Laccase (L200).

Bei der Betrachtung der Figur fällt auf, dass bei der erfindungsgemäß hergestellten Platte (L 200 + 10 mM HBA) eine mittlere Querzugfestigkeit von 0,79 N/mm² erreicht wurde. Dies bedeutet eine deutliche Erfüllung der EN-Norm 319, in der 0,65 N/mm² erforderlich sind. Auch die Dickenquellwerte konnten mit 16,8 % bei der Platte L 200 + HBA 10 knapp unter den nach der EN 317 erforderlichen Höchstquellwert von 17 % gesenkt werden. Bei den Platten L 200 (nur mit Laccase) lag die Querzugfestigkeit mit 0,62 N/mm² zu niedrig und der Quellwert mit etwa 42 % zu hoch, um die Normen zu erfüllen.

Bei den Referenz-Holzfaserplatten (mit denaturierter = inaktiver Laccase) sind keinerlei Normen erfüllt worden. Die Querzugfestigkeit lag bei 0,08 N/mm², die Dickenquellung bei 105%.

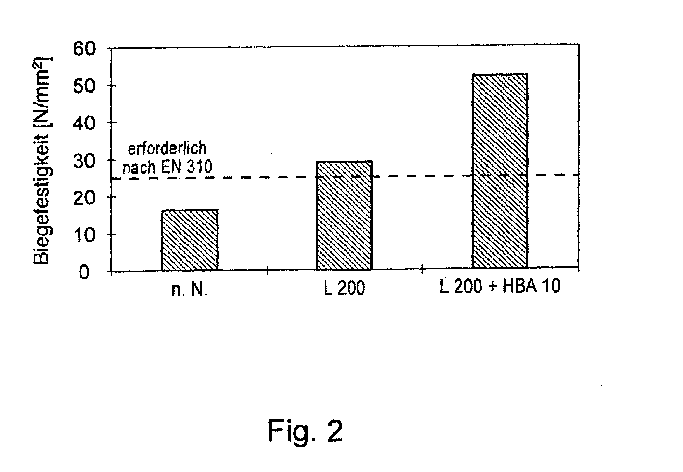

Neben der Ermittlung der Querzugfestigkeiten und der Dickenquellungen wurden auch die Biegefestigkeiten der eben erwähnten MDF-Platten getestet (Fig. 2).

Wie in Figur 2 zu erkennen, erfüllen die beiden Laccase und Laccase-Mediator gebunden MDF-Platten die für die Biegefestigkeiten erforderliche EN-Norm 310. Dabei wird deutlich, dass die Biegefestigkeit bei der Verwendung von 10 mM HBA mit etwa 52 N/mm² wesentlich höher lag als ohne Mediator (29 N/mm² bei der Probe L 200). Bei den Referenz-Holzfaserplatten wurden sehr niedrige Biegefestigkeiten gemessen.

### BEISPIELE II bis VI

Anschließend wurden - analog zu Beispiel I - noch weitere MDF-Faserplatten gemäß der vorliegenden Erfindung hergestellt. Dabei wurden die in der Tabelle I angegebenen Mediatoren II bis VI verwendet.

**Tabelle I**

| **Mediatoren** | **Beispiel No.** | **Biegefestigkeit [N/mm²]** |
|---|---|---|
| Acetosyringon | II | 25 |
| Syringaldehyd | III | 23 |
| Methylsyringat | IV | 21 |
| Vanillin | V | 17,7 |
| Vanillinsäure | VI | 18 |

Ebenfalls wurden die Biegefestigkeiten (in N/mm²) analog zu oben gemessen. Die verwendeten Mediatoren erreichten ebenfalls sehr gute Ergebnisse.

Aus diesen Ergebnissen kann geschlossen werden, dass bei der enzymatischen Aktivierung der Holzfasern mit Laccase und erfindungsgemäßem Mediator keine Inkubationszeit notwendig ist, um MDF-Platten herzustellen, die die Normen erfüllen. Somit bewirkt das Laccase-Mediator-System auf den Holzfasern einen erheblichen chemischen und physikalischen Effekt.

## Patentansprüche

1. Verwendung eines Materials ausgewählt aus der Gruppe enthaltend 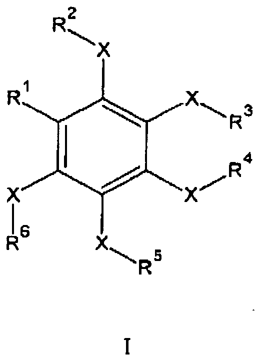 wobei
R¹ ausgewählt ist aus Hydroxyl (-OH) und Thiol (-SH);
jedes X unabhängig voneinander ausgewählt ist aus der Gruppe enthaltend Einfachbindung, -CR'R"-, -CR'=CR"-, wobei R' und R" unabhängig voneinander ausgewählt sind aus der Gruppe enthaltend Wasserstoff, Alkyl, Aryl, Cycloalkyl,
sowie
R² bis R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate,
Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-, -NR°-, -SiR°R°°-, -CO-,-COO-, -OCO-, -OCO-O-, -SO₂-, -S-CO-, -CO-S-, -CY¹=CY² oder C≡C- ersetzt sein können und zwar derart, dass O und/oder S Atome nicht direkt miteinander verbunden sind (endständige CH₃-Gruppen werden wie CH₂-Gruppen im Sinne von CH₂-H verstanden),
und wobei mindestens ein Rest R² bis R⁶ ausgewählt ist aus der Gruppe Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon; 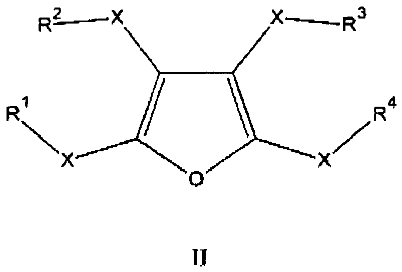
wobei R¹ bis R⁴ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cyclealkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl,
Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-. -NH-, -NR°-, -SiR°R°°-, -CO-,-COO-, -OCO-, -OCO-O-, -SO₂-, -S-CO-, -CO-S-, -CY¹=CY² oder -C≡C- ersetzt sein können und zwar derart, dass O und/oder S Atome nicht direkt miteinander verbunden sind (endständige CH₃-Gruppcn werden wie CH₂-Gruppen im Sinne von CH₂-H verstanden),
jedes X unabhängig voneinander ausgewählt ist aus der Gruppe enthaltend Einfachbindung, -CR'R"-, -CR'=CR"-, wobei R' und R" unabhängig voneinander ausgewählt sind aus der Gruppe enthaltend Wasserstoff, Alkyl, Aryl, Cycloalkyl,
wobei mindestens ein Rest R¹ bis R⁴ ausgewählt ist aus der Gruppe Hydroxyl und Thiol und jeweils das zugehörige X eine Einfachbindung darstellt;
und wobei mindestens ein anderer Rest R¹ bis R⁴ ausgewählt ist aus der Gruppe Alkoxy, Formyl, Carboxy- und/oder Carbonyl derivaten, Keto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
oder Mischungen daraus als Mediator bei der Herstellung von lignocellulosehaltigen Formkörpern, insbesondere Holz- und/oder Verbundwerkstoffen, wobei das Material zusammen mit mindestens einem phenoloxidierenden Enzym verwendet wird

2. Verwendung nach Anspruch 1, wobei das Material ein Material mit der folgenden Struktur III umfasst: 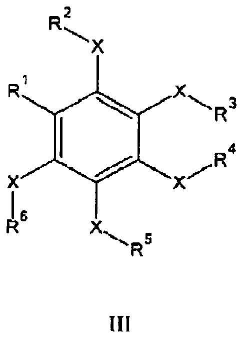 wobei
R¹ ausgewählt ist aus Hydroxyl (-OH) und Thiol (-SH);
R⁴ ausgewählt ist aus der Gruppe enthaltend Alkoxy, Formyl, Carboxy- und/oder Carbonyl derivaten, Kcto, Ketoaryl, Halogenketoaryl, Ketoheteroaryl, Ketoalkyl, Halogenketoalkyl, Ketoalkenyl, Halogenketoalkenyl, Sulphonyl, Sulphoalkyl, Sulphoarenyl, Sulphonate, Sulphate, Sulphon;
jedes X unabhängig voneinander ausgewählt ist aus der Gruppe enthaltend Einfachbindung, -CR R"-, -CR'=CR"-, wobei R' und R"unabhängig voneinander ausgewählt sind aus der Gruppe enthaltend Wasserstoff, Alkyl, Aryl, Cycloalkyl,
sowie
R², R³ R⁵ und R⁶ unabhängig voneinander ausgewählt sind aus der Gruppe enthaltend Wasserstoff, Hydroxyl, Thiol, Halogen, Pseudohalogen, Formyl, Carboxy- und/oder Carbonyl derivaten, Alkyl, langkettiges Alkyl, Alkoxy, langkettiges Alkoxy, Cycloalkyl, Halogenalkyl, Aryl, Arylene, Halogenaryl, Heteroaryl, Heteroarylene, Heterocycloalkylene, Heterocycloalkyl, Halogenheteroaryl, Alkenyl, Halogenalkenyl, Alkinyl, Halogenalkinyl, Keto, Ketoaryl, Halogenketoaryl, Ketoheteroaryl, Ketoalkyl, Halogenketoalkyl, Ketoalkenyl, Halogenketoalkenyl, Phosphoalkyl, Phosphonate, Phosphate, Phosphin, Phosphine oxid, Phosphoryl, Phosphoaryl, Sulphonyl, Sulphoalkyl, Sulphoarenyl, Sulphonate, Sulphate, Sulphone, Polyether, Silylalkyl, Silylalkyloxy, wobei bei geeigneten Resten eine oder mehrere nicht-benachbarte CH₂-Gruppen unabhängig voneinander durch -O-, -S-, -NH-, -NR°-, -SiR°R°°-, -CO-, - COO-, -OCO-, -OCO-O-, -SO₂-, -S-CO-, -CO-S-, -CY¹=CY² oder -C=C- ersetzt sein können und zwar derart, dass O und/oder S Atome nicht direkt miteinander verbunden sind (endständige CH₃-Gruppen werden wie CH₂-Gruppen im Sinne von CH₂-H verstanden),

3. Verwendung nach Anspruch 1 oder 2, wobei das Material kein Stickstoff enthält.

4. Verwendung nach einem der Ansprüche 1 bis 3, wobei das phenoloxidierende Enzym ausgewählt ist aus der Gruppe Laccasen, Mg-Peroxidasen, Ligninperoxidasen, Ligninasen, Bilirubinoxidasen, Catecholoxidasen oder Mischungen daraus.

5. Verwendung nach einem der Ansprüche 1 bis 4, wobei das Verhältnis zwischen dem Material und dem Enzym ≥0,5 U/ml Enzym pro 1 mM Material bis ≤40 U/ml Enzym pro 1 mM Material beträgt.

6. Verwendung nach einem der Ansprüche 1 bis 5, wobei der lignocelluloschaltige Formkörper bindemittelfrei ist.

7. Verfahren zur Herstellung von lignocellulosehaltigen Formkörpern, insbesondere Holz- und/oder Verbundwerkstoffen, umfassend die Schritte:
a) Versetzen mindestens eines Vorläufermaterials mit einer Lösung, enthaltend mindestens ein Material gemäß einem der Ansprüche 1 bis 6 und mindestens ein phenoloxidierendes Enzym
b) mechanische und/oder thermomechanische Verformung nach einer Inkubationszeit von <30 min

8. Verfahren nach Anspruch 7, wobei in Schritt a) die Konzentration (in U/ml) des mindestens einen Enzyms >50 U/ml bis ≤400 U/ml beträgt.

## Claims

1. Use of a material, chosen from the group comprising 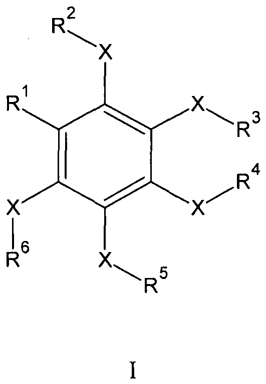 wherein
R¹ is chosen from hydroxyl (-OH) and thiol (-SH);
each X, independently of each other, is chosen from the group comprising a single bond, -CR R"-, -CR'=CR"-, wherein R' and R", independently of each other, are chosen from the group comprising hydrogen, alkyl, aryl, cycloalkyl,
as well as
R² to R⁶, independently of each other, are chosen from the group comprising hydrogen, hydroxyl, thiol, halogen, pseudohalogen, formyl, carboxy- and/or carbonyl derivatives, alkyl, long-chain alkyl, alkoxy, long-chain alkoxy, cycloalkyl, haloalkyl, aryl, arylene, haloaryl, heteroaryl, heteroarylene, heterocycloalkylene, heterocycloalkyl, haloheteroaryl, alkenyl, haloalkenyl, alkynyl, haloalkynyl, keto, ketoaryl, haloketoaryl, ketoheteroaryl, ketoalkyl, haloketoalkyl, ketoalkenyl, haloketoalkenyl, phosphoalkyl, phosphonates, phosphates, phosphine, phosphine oxide, phosphoryl, phosphoaryl, sulfonyl, sulfoalkyl, sulfoarenyl, sulfonates, sulfates, sulfones, polyethers, silylakyl, silylalkyloxy, wherein in appropriate residues, one or more non-adjacent CH₂ groups, independently of each other, can be replaced by -O-,-S-, -NH-, -NR°-, -SiR°R°°-, -CO-, -COO-, -OCO-, -OCO-O-, -SO₂-, -S-CO-, -CO-S-, -CY¹=CY² or -C≡C-, and specifically so that O and/or S atoms are not directly bonded to each other (terminal CH₃ groups, like CH₂ groups, are understood in the sense of CH₂-H),
and wherein at least one residue R² to R⁶ is chosen from the group alkoxy, formyl, carboxy- and/or carbonyl derivatives, keto, ketoaryl, haloketoaryl, ketoheteroaryl, ketoalkyl, haloketoalkyl, ketoalkenyl, haloketoalkenyl, sulfonyl, sulfoalkyl, sulfoarenyl, sulfonates, sulfates, sulfone; 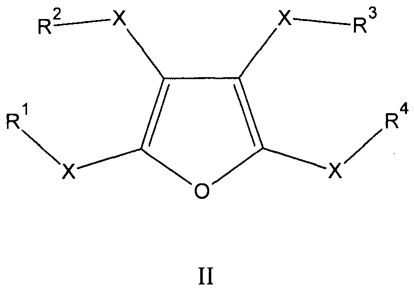
wherein R¹ to R⁴, independently of each other, are chosen from the group comprising hydrogen, hydroxyl, thiol, halogen, pseudohalogen, formyl, carboxy- and/or carbonyl derivatives, alkyl, long-chain alkyl, alkoxy, long-chain alkoxy, cycloalkyl, haloalkyl, aryl, arylene, haloaryl, heteroaryl, heteroarylene, heterocycloalkylene, heterocycloalkyl, haloheteroaryl, alkenyl, haloalkenyl, alkynyl, haloalkynyl, keto, ketoaryl, haloketoaryl, ketoheteroaryl, ketoalkyl, haloketoalkyl, ketoalkenyl, haloketoalkenyl, phosphoalkyl, phosphonates, phosphates, phosphine, phosphine oxide, phosphoryl, phosphoaryl, sulfonyl, sulfoalkyl, sulfoarenyl, sulfonates, sulfates, sulfones, polyether, silylalkyl, silylalkyloxy, wherein in appropriate residues, one or more non-adjacent CH₂ groups, independently of each other, could be replaced by -O-, -S-, -NH-, -NR°-, -SiR°R°°-, -CO-, -COO-, -OCO-, -OCO-O-, -SO₂-, -S-CO-, -CO-S-, -CY¹=CY² or -C≡C-, and specifically so that O and/or S atoms are not directly bonded to each other (terminal CH₃ groups, like CH₂ groups, are understood in the sense of CH₂-H),
each X, independently of each other, is chosen from the group comprising a single bond, -CR R" -, -CR'=CR"-, wherein R' and R", independently of each other, are chosen from the group comprising hydrogen, alkyl, aryl, cycloalkyl,
wherein at least one residue R¹ to R⁴ is chosen from the group hydroxyl and thiol, and each corresponding X represents a single bond;
and wherein at least one other residue R¹ to R⁴ is chosen from the group alkoxy, formyl, carboxy- and/or carbonyl derivatives, keto, ketoaryl, haloketoaryl, ketoheteroaryl, ketoalkyl, haloketoalkyl, ketoalkenyl, haloketoalkenyl, sulfonyl, sulfoalkyl, sulfoarenyl, sulfonates, sulfates, sulfone;
or mixtures thereof as a mediator in the production of lignocellulose-comprising molded articles, especially wood fiber and/or composite materials, wherein the material is used together with at least one phenol oxidizing enzyme.

2. Use according to Claim 1, wherein the material includes a material with the following structure III: 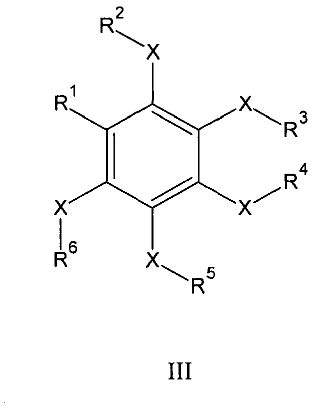 wherein
R¹ is chosen from hydroxyl (-OH) und thiol (-SH);
R⁴ is chosen from the group comprising alkoxy, formyl, carboxy- and/or carbonyl derivatives, keto, ketoaryl, haloketoaryl, ketoheteroaryl, ketoalkyl, haloketoalkyl, ketoalkenyl, haloketoalkenyl, sulfonyl, sulfoalkyl, sulfoarenyl, sulfonates, sulfates, sulfone;
each X, independently of each other, is chosen from the group comprising a single bond, -CR R"-, -CR'=CR"-, wherein R' and R", independently of each other, are chosen from the group comprising hydrogen, alkyl, aryl, cycloalkyl,
as well as
R² , R³ R⁵ and R⁶, independently of each other, are chosen from the group comprising hydrogen, hydroxyl, thiol, halogen, pseudohalogen, formyl, carboxy- and/or carbonyl derivatives, alkyl, long-chain alkyl, alkoxy, long-chain alkoxy, cycloalkyl, haloalkyl, aryl, arylene, haloaryl, heteroaryl, heteroarylene, heterocycloalkylene, heterocycloalkyl, haloheteroaryl, alkenyl, haloalkenyl, alkynyl, haloalkynyl, keto, ketoaryl, haloketoaryl, ketoheteroaryl, ketoalkyl, haloketoalkyl, ketoalkenyl, haloketoalkenyl, phosphoalkyl, phosphonates, phosphates, phosphine, phosphine oxide, phosphoryl, phosphoaryl, sulfonyl, sulfoalkyl, sulfoarenyl, sulfonates, sulfates, sulfones, polyether, silylalkyl, silylalkyloxy, wherein in appropriate residues, one or more non-adjacent CH₂ groups, independently of each other, can be replaced by -O-, - S-, -NH-, -NR°-, -SiR°R°°-, -CO-, -COO-, -OCO-, -OCO-O-, -SO₂-, -S-CO-, -CO-S-, -CY¹=CY² or -C≡C-, and specifically so that O and/or S atoms are not directly bonded to each other (terminal CH₃ groups, like CH₂ groups, are understood in the sense of CH₂-H).

3. Use according to Claim 1 or 2, wherein the material contains no nitrogen.

4. Use according to one of the Claims 1 to 3, wherein the phenol oxidizing enzyme is chosen from the group laccases, Mg-peroxidases, lignin peroxidases, ligninases, bilirubin oxidases, catechol oxidases or their mixtures

5. Use according to one of the Claims 1 to 4, wherein the ratio between the material and the enzyme is ≥ 0.5 U/ml enzyme per 1 mM material to ≤ 40 U/ml enzyme per 1 mM material.

6. Use according to one of the Claims 1 to 5, wherein the lignocellulose-comprising molded article is binder-free.

7. Method for production of lignocellulose-comprising molded articles, especially wood and/or composite materials, comprising the steps:
a) Mixing of at least one precursor material with a solution comprising at least a material according to one of the claims 1 to 6 and at least one phenol oxidizing enzyme
b) mechanical and/or thermomechanical deformation after an incubation period of < 30 min.

8. Method according to Claim 7, wherein in step a) the concentration (in U/ml) of the at least one enzyme is ≥ 50 U/ml to ≤ 400 U/ml.

## Revendications

1. Utilisation d'un matériau sélectionné dans le groupe contenant 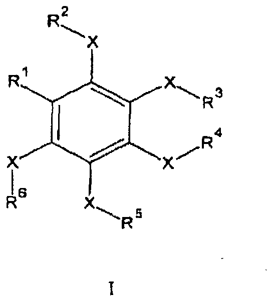 dans laquelle
R¹ est sélectionné parmi hydroxyle (-OH) et thiol (-SH) ;
chaque X est sélectionné, indépendamment des autres, dans le groupe contenant une liaison simple, -CR'R"-, -CR'=CR"-, dans lesquels R' et R" sont sélectionnés, indépendamment l'un de l'autre, dans le groupe contenant hydrogène, alkyle, aryle, cycloalkyle,
ainsi que
R² à R⁶ sont sélectionnés, indépendamment les uns des autres, dans le groupe contenant hydrogène, hydroxyle, thiol, halogène, pseudo-halogène, formyle, dérivés de carboxy et/ou de carbonyle, alkyle, alkyle à longue chaine, alcoxy, alcoxy à longue chaine, cycloalkyle, haloalkyle, aryle, arylène, haloaryle, hétéroaryle, hétéroarylène, hétérocycloalkylène, hétérocycloalkyle, halohétéroaryle, alcényle, haloalcényle, alcynyle, haloalcynyle, céto, cétoaryle, halocétoaryle, cétohétéroaryle, cétoalkyle, halocétoalkyle, cétoalcényle, halocétoalcényle, phosphoalkyle, phosphonates, phosphates, phosphine, oxyde de phosphine, phosphoryle, phosphoaryle, sulfonyle, sulfoalkyle, sulfoarényle, sulfonates, sulfates, sulfone, polyéther, silylalkyle, silylalkyloxy, dans lesquels, dans des groupements appropriés, un ou plusieurs groupements CH₂- non adjacents, indépendamment les uns des autres, peuvent être remplacés par -O-, -S-, -NH-, -NR°- -SiR°RR°°-, -CO-, -COO-, -OCO-, -OCO-O-, -SO₂-, -S-CO-, -CO-S-, -CY¹=CY² ou -C≡C-, et notamment de façon telle que les atomes O et/ou S ne sont pas directement liés entre eux (des groupements CH₃ terminaux, comme des groupements CH₂, sont à entendre dans le sens de CH₂-H),
et dans laquelle au moins un radical R² à R⁶ est sélectionné dans le groupe alcoxy, formyle, dérivés de carboxy et/ou carbonyle, céto, cétoaryle, halocétoaryle, cétohétéroaryle, cétoalkyle, halocétoalkyle, cétoalcényle, halocétoalcényle, sulfonyle, sulfoalkyle, sulfoarényle, sulfonates, sulfates, sulfones ; 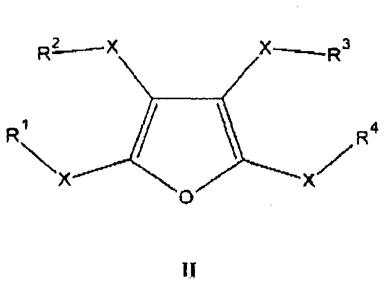
dans laquelle R² à R⁴ sont sélectionnés, indépendamment les uns des autres, dans le groupe contenant hydrogène, hydroxyle, thiol, halogène, pseudo-halogène, formyle, dérivés de carboxy et/ou de carbonyle, alkyle, alkyle à longue chaine, alcoxy, alcoxy à longue chaine, cycloalkyle, haloalkyle, aryle, arylène, haloaryle, hétéroaryle, hétéroarylène, hétérocycloalkylène, hétérocycloalkyle, haloheteroaryle, alcényle, haloalcényle, alcynyle, haloalcynyle, céto, cétoaryle, halocétoaryle, cétohétéroaryle, cétoalkyle, halocétoalkyle, cétoalcényle, halocétoalcényle, phosphoalkyle, phosphonates, phosphates, phosphine, oxyde de phosphine, phosphoryle, phosphoaryle, sulfonyle, sulfoalkyle, sulfoarényle, sulfonates, sulfates, sulfones, polyéther, silylalkyle, silylalkyloxy, dans lesquels, dans des groupements appropriés, un ou plusieurs groupements CH₂- non adjacents, indépendamment les uns des autres, peuvent être remplacés par -O-, -S-, -NH-, -NR°-, -SiR°RR°°-, -CO-, -COO-, -OCO-, -OCO-O-, -SO₂-, -S-CO-, -CO-S-, -CY¹=CY² ou -C≡C-, et notamment de façon telle que les atomes O et/ou S ne sont pas directement liés entre eux (des groupements CH₃ terminaux, comme des groupements CH₂, sont à entendre dans le sens de CH₂-H),
chaque X est sélectionné, indépendamment des autres, dans le groupe contenant une liaison simple, -CR'R"-, -CR'=CR"-, dans lesquels R' et R" sont sélectionnés, indépendamment l'un de l'autre, dans le groupe contenant hydrogène, alkyle, aryle, cycloalkyle,
dans laquelle au moins un radical R¹ à R⁴ est sélectionné dans le groupe hydroxyle et thiol et chaque X correspondant représente une liaison simple ;
et dans laquelle au moins un autre radical R¹ à R⁴ est sélectionné dans le groupe alcoxy, formyle, dérivés de carboxy et/ou de carbonyle, céto, cétoaryle, halocétoaryle, cétohétéroaryle, cétoalkyle, halocétoalkyle, cétoalcényle, halocétoalcényle, sulfonyle, sulfoalkyle, sulfoarényle, sulfonates, sulfates, sulfone ;
ou mélanges de ceux-ci en tant que médiateur lors de la production d'articles moulés contenant de la lignocellulose, en particulier de matériaux à base de bois et/ou de matériaux composites, dans lesquels le matériau est utilisé avec au moins une enzyme oxydant le phénol.

2. Utilisation selon la revendication 1, dans laquelle le matériau comprenant un matériau avec la structure III suivante : 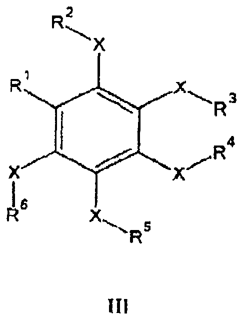 dans laquelle
R¹ est sélectionné parmi hydroxyle (-OH) et thiol (-SH) ;
R⁴ est sélectionné dans le groupe contenant alcoxy, formyle, dérivés de carboxy et/ou de carbonyle, céto, cétoaryle, halocétoaryle, cétohétéroaryle, cétoalkyle, halocétoalkyle, cétoalcényle, halocétoalcényle, sulfonyle, sulfoalkyle, sulfoarényle, sulfonates, sulfates, sulfone ;
chaque X est sélectionné, indépendamment des autres, dans le groupe contenant une liaison simple, -CR'R"-, -CR'=CR"-, dans lesquels R' et R" sont sélectionnés, indépendamment l'un de l'autre, dans le groupe contenant hydrogène, alkyle, aryle, cycloalkyle,
ainsi que
R², R³, R⁵ et R⁶ sont sélectionnés, indépendamment les uns des autres, dans le groupe contenant hydrogène, hydroxyle, thiol, halogène, pseudo-halogène, formyle, dérivés de carboxy et/ou de carbonyle, alkyle, alkyle à longue chaine, alcoxy, alcoxy à longue chaine, cycloalkyle, haloalkyle, aryle, arylène, haloaryle, hétéroaryle, hétéroarylène, hétérocycloalkylène, hétérocycloalkyle, halohétéroaryle, alcényle, haloalcényle, alcynyle, haloalcynyle, céto, cétoaryle, halocétoaryle, cétohétéroaryle, cétoalkyle, halocétoalkyle, cétoalcényle, halocétoalcényle, phosphoalkyle, phosphonates, phosphates, phosphine, oxyde de phosphine, phosphoryle, phosphoaryle, sulfonyle, sulfoalkyle, sulfoarényle, sulfonates, sulfates, sulfones, polyéther, silylalkyle, silylalkyloxy, dans lesquels, dans des groupements appropriés, un ou plusieurs groupements CH₂- non adjacents, indépendamment les uns des autres, peuvent être remplacés par -O-, -S-, NH-, -NR°-, -SiR°RR°°-, -CO-, -COO-, -OCO-, -OCO-O-, -SO₂-, -S-CO-, -CO-S-, -CY¹=CY² ou -C≡C-, et notamment de façon telle que les atomes O et/ou S ne sont pas directement liés entre eux (des groupements CH₃ terminaux, comme des groupements CH₂, sont à entendre dans le sens de CH₂-H),

3. Utilisation selon la revendication 1 ou la revendication 2, dans laquelle le matériau ne contient pas d'azote.

4. Utilisation selon l'une des revendications 1 à 3, dans laquelle l'enzyme oxydant le phénol est sélectionnée dans le groupe des laccases, Mg-peroxydases, lignine peroxydases, ligninases, bilirubine oxydases, catéchol oxydases ou des mélanges de celles-ci.

5. Utilisation selon l'une des revendications 1 à 4, dans laquelle le rapport entre le matériau et l'enzyme est de ≥0,5 U/ml d'enzyme par 1 mM de matériau à ≤40 U/ml d'enzyme par 1 mM de matériau.

6. Utilisation selon l'une des revendications 1 à 5, dans laquelle l'article moulé contenant de la lignocellulose est exempt de liants.

7. Procédé pour la production d'article moulés contenant de la lignocellulose, en particulier des matériaux à base de bois et/ou de matériaux composites, comprenant les étapes :
a) mélanger au moins un matériau précurseur avec une solution contenant au moins un matériau selon l'une des revendications 1 à 6 et au moins une enzyme oxydant le phénol
b) déformation mécanique et/ou thermomécanique après un temps d'incubation de <30 min.

8. Procédé selon la revendication 7, dans lequel, dans l'étape a), la concentration (en U/ml) de la au moins une enzyme est de ≥50 U/ml à ≤400 U/ml.
